# EUROPÄISCHE PATENTSCHRIFT

(11) **EP 1 128 242 B1**
(45) Veröffentlichungstag und Bekanntmachung des Hinweises auf die Patenterteilung: **07.01.2015**
(21) Anmeldenummer: 01101343.0
(22) Anmeldetag: 22.01.2001
(51) Int. Cl.: G05B 19/042, G06F 21/44, G06F 21/73, H04L 9/32, H04L 29/06, G06F 21/57

(54) **Signaturverfahren**
Process of signature
Méthode de signature

(30) Priorität: 25.02.2000 DE 10008974
(43) Veröffentlichungstag der Anmeldung: 29.08.2001
(73) Patentinhaber: Bayerische Motoren Werke Aktiengesellschaft, 80809 München (DE)
(72) Erfinder: Schmidt, Ernst, 85737 Ismaning (DE); Kuhls, Burkhard, 81673 München (DE)

(56) Entgegenhaltungen:
- EP-A- 0 816 970
- EP-A- 0 939 012
- US-A- 5 844 986
- US-A- 5 970 147

## Beschreibung

Die Erfindung betrifft ein Verfahren zur Sicherstellung der Datenintegrität einer Software für ein Steuergerät eines Kraftfahrzeugs.

Mit dem zunehmenden Anteil der Elektronik und der Kommunikationsmöglichkeiten im und mit einem Fahrzeug wachsen auch die Anforderungen, welche an die Sicherheit gestellt werden müssen.

In den verschiedensten Bereichen des Fahrzeugs werden Microcontroller zur Steuerung eingesetzt. Diese Steuergeräte sind heutzutage oft über ein Bussystem miteinander verbunden, und es gibt meist Möglichkeiten (z.B. Diagnoseverbindung), von außen auf diesen Bus zuzugreifen und mit den einzelnen Steuergeräten zu kommunizieren.

Die Funktionsweise der Steuergeräte wird durch Softwareprogramme bestimmt. Bisher ist die Software, die in einem Steuergerät (auch: Controller) eingesetzt wird, meist in einem nicht programmierbaren Speicher abgelegt (z.B. bei maskenprogrammierte Mikroprozessoren). Dadurch ist eine Manipulation der Software nicht ohne weiteres zu realisieren. Beispielsweise kann der komplette Austausch eines Speicherbausteins gegen einen anderen Speicherbaustein erkannt und entsprechend darauf reagiert werden.

Durch den zukünftigen Einsatz von programmierbaren, insbesondere sogenannten flashprogrammierbaren Steuergeräten im Fahrzeug wird die Gefahr jedoch größer, daß unbefugte Manipulationen an der Software und somit an der Arbeitsweise der Steuergeräte durchgeführt werden. So könnte der Austausch von Software seitens nicht autorisierter Personen einfach durch Neuprogrammierung mit geringem Aufwand vollzogen werden.

Aus Sicherheitsgründen und zur Erfüllung von gesetzlichen Anforderungen müssen jedoch Maßnahmen ergriffen werden, die entweder eine Veränderung von Originalsoftware verhindern oder eine solche Änderung nur autorisierten Personen zugestehen.

Im übrigen könnte es sich zukünftig als vorteilhaft erweisen, ein Gleichteile-Konzept zu Verfolgen, wobei bei unterschiedlichen Modellen gleiche Hardware verwendet wird. Der Unterschied in der Funktionsweise liegt dann nur noch in der Software. Bei diesem Konzept besteht freilich die Notwendigkeit, daß eine bestimmte Software nur auf einem individuellen Fahrzeug lauffähig ist und nicht einfach kopierbar sein darf.

Aus dem Stand der Technik sind eine Vielzahl von Authentifizierungsverfahren und -vorrichtungen bekannt.

So ist in der US 5,844,986 ein Verfahren beschrieben, welches zur Vermeidung eines nicht erlaubten Eingriffs in ein BIOS-Systems eines PC verwendet wird. Ein kryptographischer Coprozessor, der einen BIOS-Speicher enthält, führt basierend auf einem sogenanten Publik-Key-Verfahren mit einem öffentlichen und einem geheimen Schlüssel eine Authentifizierung und Überprüfung einer BIOS-Änderung durch. Dabei erfolgt die Überprüfung durch eine Prüfung einer in der einzuspielenden Software eingebetteten digitalen Signatur.

Aus der EP 0 816 970 ist eine Vorrichtung zur Überprüfung einer Firmensoftware bekannt. Diese Vorrichtung zur Authentifizierung eines Boot-PROM-Speichers umfaßt einen Speicherteil mit einem Mikro-Code. Ein Authentifizierungs-Sektor umfaßt einen Hash-Generator, der Hash-Daten in Antwort auf die Ausführung des Mikro-Codes erzeugt.

EP-A-0 939 012 schlägt ein Verfahren zur Verifizierung der Kohärenz von Informationen vor, die über ein Fernladegerät in einen Rechner zur Steuerung der Funktion einer funktionalen Einrichtung eines Automobils geladen werden. Hierbei berechnet der Rechner auf der Basis der Informationen ein Validierungswort und vergleicht das Validierungswort mit einem entsprechenden, in dem Rechner für das Fernladegerät unzugänglich gespeicherten Validierungswort. Zur Verifizierung prüft der Rechner, ob das vom Rechner berechnete Validierungswort mit dem im Rechner gespeicherten Validierungswort übereinstimmt.

Mit den obigen Verfahren oder Vorrichtungen ist jedoch nicht unmittelbar die Überprüfung einer in ein Steuergerät eines Kraftfahrzeuges einzuspielenden Software möglich.

Aufgabe der vorliegenden Erfindung ist es, ein Verfahren zur Sicherstellung der Einspielung einer authentischen Software in ein Steuergerät eines Kraftfahrzeugs zur Verfügung zu stellen.

Die Aufgabe wird durch die Merkmale im Anspruch 1 gelöst.

Demgemäß wird zunächst ein Schlüsselpaar zum Ver- und Entschlüsseln von elektronischen Daten erzeugt. Unter Schlüssel versteht man hierbei allgemein Codier- und/oder Decodierparameter, welche aus an sich bekannten kryptographischen Algorithmen bekannt sind.

Vorliegend wird die Software mittels des ersten Schlüssels mit einer elektronischen Unterschrift (Signatur) versehen. Zur Verifikation der Echtheit der Software ist in dem oder für das Steuergerät, in dem diese Software eingespielt werden soll, ein zugehöriger zweiter Schlüssel hinterlegt. Mit diesem zweiten Schlüssel kann die elektronische Unterschrift der Software geprüft werden. Verläuft die Prüfung positiv, so wird die Software akzeptiert und kann zur Steuerung des Steuergerätes herangezogen werden.

Als Verschlüsselung kann gemäß einer ersten Ausführungsform ein sogenanntes symmetrisches Verfahren verwendet werden, bei dem beide Schlüssel identisch sind. Eigentlich handelt es sich dabei also nur um einen Schlüssel, der an verschiedenen Stellen verwendet wird. Da aber immer mit Möglichkeiten gerechnet werden muß, daß ein in einem Steuergerät hinterlegter Schlüssel bekannt wird, ist die Sicherheitsstufe eines symmetrischen Verfahren nicht optimal. Ein solches Verfahren kann nur daher dann eingesetzt werden, wenn nicht allzu sicherheitskritische Vorgänge betroffen sind. Zur Erhöhung der Sicherheitsstufe kann ein zusätzlicher Auslöseschutz in Form einer speziellen Hardware eingesetzt werden.

Gemäß einer weiteren bevorzugten Ausführungsform wird ein asymmetrisches Verschlüsselungsverfahren mit einem geheimen und einem öffentlichen Schlüssel gewählt. Dabei kann der öffentliche Schlüsel im oder für das Steuergerät hinterlegt sein. Mit dem geheimen Schlüssel würde dann die Software signiert werden. Alternativ kann auch das Steuergerät oder das Fahrzeug selbst das asynchrone Schlüsselpaar erzeugen und dann den geheimen Schlüssel in dem Steuergerät hinterlegen. Der öffentliche Schlüssel müßte dann auslesbar sein, so daß mit ihm eine Software signiert werden kann. Natürlich müßte bei der letzten Alternative sichergestellt werden, daß der geheime Schlüssel nicht auslesbar ist.

Bei den Verschlüsselungsalgorithmen mit einem geheimen und einem öffentlichen Schlüssel handelt es sich um ein sogenanntes Public-Key-Verfahren, bei dem der öffentliche Schlüssel öffentlich bekannt sein darf, wogegen der geheime Schlüssel nur einer autorisierten Stelle, beispielsweise einem Trust-Center, bekannt ist. Solche kryptographischen Algorithmen sind z.B. Rivest, Shamir und Adleman (RSA-Algorithmus), Data Encryption Algorithmus (DEA-Algorithmus) und dergleichen Algorithmen. Mit dem geheimen oder öffentlichen Schlüssel läßt sich - analog zur handschriftlichen Unterschrift - eine digitale Signatur zu einem elektronischen Dokument erzeugen. Nur der Besitzer des geheimen bzw. öffentlichen Schlüssels kann eine gültige Signatur erstellen. Die Echtheit des Dokuments kann dann über die Verifikation der Unterschrift mittels des zugehörigen öffentlichen bzw. geheimen Schlüssels geprüft werden. Der geheime Schlüssel wird manchmal auch als privater Schlüssel bezeichnet.

Ein nicht autorisierter Dritter, der den richtigen Schlüssel nicht kennt, ist nicht in der Lage, eine gültige Signatur zu erstellen. Wird eine manipulierte und nicht richtig unterzeichnete Software dann in ein Steuergerät geladen, so wird dies mit dem zugehörigen Schlüssel erkannt, und das Steuergerät wird beispielsweise in einen nicht-lauffähigen Zustand versetzt.

Gemäß einer weiteren Ausführungsform der Erfindung wird der Schlüssel im Boot-Sektor des Steuergeräts abgelegt. Der Boot-Sektor ist meist in besonderer Weise geschützt und kann nicht ohne weiteres überschrieben werden. Gemäß einer Weiterbildung kann der Boot-Sektor nach dem Beschreiben und der Eingabe des Schlüssels "abgesperrt" werden, so daß ein weiterer Zugriff, insbesondere ein weiteres Beschreiben, nicht mehr möglich ist. Damit würde sichergestellt werden, daß der im Boot-Sektor abgelegte Schlüssel gegen Manipulation geschützt ist.

Um die Anforderungen eines ausschließlich fahrzeugindividuellen Einsatzes einer Software zu ermöglichen, enthält die für ein Steuergerät eines bestimmten Fahrzeugs vorgesehene Software fahrzeugindividualisierende Informationen, beispielsweise die Fahrgestellnummer oder andere fahrzeugindividuelle Daten. Diese Informationen sind der Software zugeordnet oder in diese integriert. Erst nach der Zuordnung oder Integration dieser Daten zur bzw. in die Software wird diese dann mit dem dafür vorgesehenen Schlüssel signiert. Ein Steuergerät akzeptiert - wie oben beschrieben - nur dann die Software, wenn die Signatur mit dem anderen zugeordneten Schlüssel als einwandfrei erkannt wird. Da die Signatur von der in der Software enthaltenen fahrzeugindividuellen Information abhängt, kann diese nicht nachträglich verändert werden. Es kann nur eine Software lauffähig für ein Steuergerät eines Fahrzeugs eingespeist werden, wenn die fahrzeugindividuelle Information nicht verändert ist und mit derjenigen des Fahrzeugs tatsächlich übereinstimmt. Ein Kopieren einer solch fahrzeugindividualisierten Software auf ein anderes Fahrzeug ist damit unmöglich, da die fahrzeugindividuelle Information ohne Verletzung der Signatur nicht verändert werden kann.

Um nicht jedesmal beim Start eines Fahrzeugs und dem Hochlaufen der Steuergeräte eine Überprüfung der Software durchführen zu müssen, wird eine solche Überprüfung vorzugsweise zumindest beim Einspielen durchgeführt. Bei einer einwandfrei signierten Software kann diese dann entsprechend gekennzeichnet werden, beispielsweise durch das Setzen eines sonst nicht zu beeinflussenden Flags in dem Steuergerät. Nach dem Setzen dieses Flags ist die Software auch bei weiteren Hochläufen akzeptiert. Auf diese Weise können Verzögerungen beim normalen Fahrzeugstart vermieden werden. Sicherzustellen ist hierbei jedoch, daß dieses Flag nicht von außen zu beeinflussen ist.

Um eine weitere Sicherheitsstufe beim Einspielen von Software in den Speichern des Steuergerätes zu schaffen, sollte gemäß einer weiteren Ausführungsform der Erfindung vor dem Einspielen der Software ein Zugang zum Speicher des Steuergerätes nur mit entsprechender Berechtigung möglich sein. Dazu ist vor dem Überspielen der signierten Software ein "Aufschließen" des Steuergerätes in einem Anmeldeschritt vorgesehen. Bei der Verwendung unterschiedlicher Zugangslevel bei der Anmeldung könnten überdies verschieden ausgestaltete Zugriffsrechte vergeben werden. Bei einem Diagnosezugriff wäre beispielsweise zunächst eine Anmeldung notwendig, wodurch das Steuergerät über die eingegebene Zugangsinformation die Zugriffsrechte und die damit verbundene Berechtigungsstufe erkennt. Je nach Rechtevergabe können die Zugriffsberechtigungen von unkritisch bis sehr kritisch eingestuft werden. Gemäß einer Ausführungsform wird ein Code vom Steuergerät angefordert und auf Gültigkeit überprüft. Dazu kann beispielsweise eine Zufallszahl im Steuergerät generiert werden, die dann vom Zugreifenden in verarbeiteter Weise, z.B. anders codiert oder signiert, zurückgereicht wird. Im Steuergerät wird diese Information dann, beispielsweise mittels eines eigenen Authentifizierungsschlüssel, überprüft.

Es ist auch möglich, die Zugriffsrechtevergabe dynamisch zu gestalten. Beispielsweise können Zugangszertifikate vergeben sein, aus deren Zertifikatsinformationen die Zugangsstufe hervorgeht. Wird ein Zugangszertifikat dann einmal akzeptiert, was wiederum über die Prüfung einer Signatur mit einem Schlüssel geschehen kann, so werden darin aufgelistete Rechte zugestanden.

Ein evtl. ausschließlich für die Zugriffssteuerung vorgesehenes Steuergerät sollte gegenüber den übrigen Steuergeräten wegen der zentralen Sicherheitsfunktion hinsichtlich der Vergabe von Authentifizierungsrechten nicht frei zugänglich im Kraftfahrzeug angeordnet sein, da durch den physikalischen Ausbau eines Steuergerätes die oben beschriebenen Schutzmechanismen umgangen werden könnten. Ein besonderer, beispielsweise mechanischer Ausbauschutz, eines solchen Sicherheitssteuergerätes ist daher wünschenswert.

Darüber hinaus kann eine besondere Sicherheitsstufe auch durch die Gestaltung eines Steuergeräteverbundes erreicht werden, bei dem verschiedene Steuergeräte zusammengeschaltet sind und sich bedingen bzw. gegenseitig überprüfen.

Um ferner die Gefahr auszuschließen, daß einzelne Steuergerät ausgebaut und gegen ein anderes ersetzt werden, kann zusätzlich ein eigener Steuergeräteausbauschutz sinnvoll sein. Zu diesem Zweck wird beispielsweise in einem Fahrzeug, in dem die Steuergeräte integriert sind, sporadisch eine Steuergeräte-Authentitätsprüfung durchgeführt. Dazu wird eine Anfrage an Steuergeräte gerichtet, die diese mit einer bestimmten erwarteten Information beantworten müssen. Stimmt die tatsächlich von dem zu überprüfenden Steuergerät abgegebenen Information nicht mit der erwarteten Information überein oder antwortet das Steuergerät nicht, so werden geeignete Sicherungsmaßnahmen ergriffen. Bei nicht sicherheitskritischen Steuergeräten kann das Steuergerät beispielsweise aus dem Kommunikationsverbund ausgeschlossen werden. Ist das Steuergerät für den Betrieb des Fahrzeugs wichtig, so wird es beispielsweise registriert, markiert oder in eine Liste eingetragen, so daß die hardwaremäßige Manipulation am jeweiligen Steuergerät zumindest nachvollzogen werden kann. Bei einer Ausführungsform müssen die Steuergeräte auf Anfrage mittels eines geheimen Authentifikationsschlüssel antworten. Ein illegal ausgetauschtes Steuergerät verfügt über einen solchen Schlüssel nicht und wird dann erkannt und entsprechend behandelt.

Die vorliegende Erfindung wird nachfolgend anhand von Ausführungsbeispielen und mit Bezug auf die beiliegenden Zeichnungen näher erläutert. Die Zeichnungen zeigen in
- Figur 1: eine schematische Darstellung einer Steuergerätestruktur in einem Fahrzeug,
- Figur 2a und Figur 2b: eine schematische Darstellung des Ablaufs einer digitalen Signatur einer Software sowie deren Überprüfung,
- Figur 3a und Figur 3b: eine Darstellung des Ablaufs der digitalen Signatur der Software aus Figur 2 jedoch in anderer Darstellungsweise,
- Figur 4: eine Darstellung des Ablaufs der Erstellung einer Signatur durch ein Trust-Center,
- Figur 5: eine Darstellung eines Algorithmus für spezielles Überprüfungsverfahren von fahrzeugindividuellen Informationen,
- Figuren 6a und 6b: ein Schaltblock- und Ablaufdiagramm für eine Authentifizierung gegenüber einem Steuergerät und
- Figur 7: ein Ablaufdiagramm für ein Einlesen von Software in ein Steuergerät.

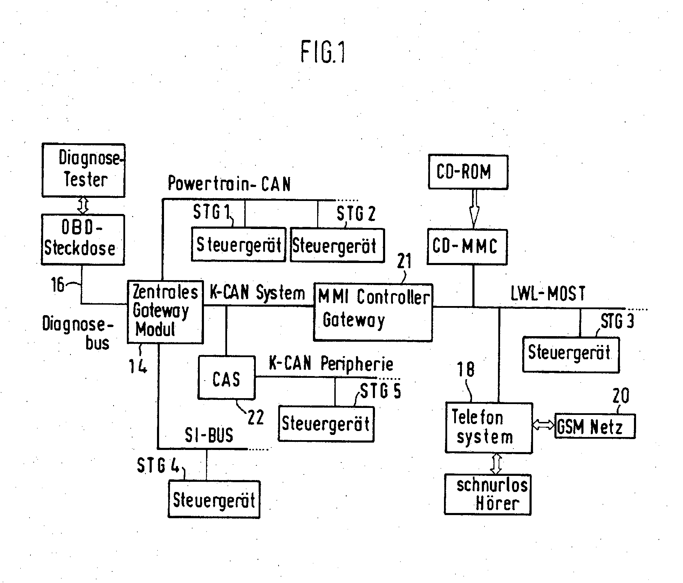

In Figur 1 ist in blockdiagrammweise eine Steuergerätestruktur mit miteinander vernetzten Einheiten abgebildet. Das Boardnetz besteht hierbei aus mehreren Teilnetzen (LWL-Most, K-CAN System, Powertrain-CAN etc.), die zum Teil unterschiedliche Übertragungsgeschwindigkeiten besitzen und durch sogenannte Gateways (Zentrales Gateway Modul, Controller Gateway) miteinander verbunden sind.

Mittels des Zentralen Gateways 14 ist ein Diagnosebus 16 mit allen übrigen Netzen mittelbar oder unmittelbar gekoppelt. Der Diagnosebus 16 stellt eine der wichtigsten Verbindungen zur Umwelt dar. Über einen Diagnosetester, der an einer OBD-Steckdose am Ende des Diagnosebuses 16 angeschlossen ist, und unter Zwischenschaltung des zentralen Gateways 14 können sämtliche Controller, Gateways und Steuergeräte im gesamten System angesprochen werden.

Alternativ besteht die Möglichkeit, über das GSM-Netz 20 und ein Telefonsystem 18 im Fahrzeug auf die Geräte im Fahrzeug zuzugreifen. Damit ist prizipiell ein Remotezugriff auf das Fahrzeug-Boardnetz möglich. Das Telefonsystem 18 stellt hierbei ebenfalls ein Gateway zwischen dem Mobilfunknetz (GSM-Netz) und den übrigen Fahrzeugbusteilnehmern dar.

Im Fahrzeugbus integriert ist ein Car-Access-System (CAS) 22, das den Zutritt zum Fahrzeug überwacht. Es beinhaltet als weitere Funktion eine elektronische Wegfahrsperre.

Ein Controller Gateway 21 stellt eine Schnittstelle zwischen einem CD-Player und dem Bordnetz dar. Beim Controller Gateway 21 werden auch Eingaben, die der Fahrer über die verschiedenen Instrumente macht, in Nachrichten umgesetzt und an die jeweils angesprochenen Steuergeräte weitergeleitet.

Daneben sind mehrere Steuergeräte (STG1 bis STG5) Steuergeräten dargestellt. Die Aufgabe eines Steuergerätes besteht nicht nur in der Steuerung einer bestimmten Einheit im Fahrzeug, sondern auch in der Kommunikation zwischen den Geräten selbst. Die Kommunikation im Fahrzeug ist "Broadcast orientiert". Ein Erzeuger von Informationen, der den Buszugriff gewonnen hat, sendet seine Informationen grundsätzlich an alle Steuergeräte. Der Datenbus, der mit dem Controller verbunden ist, wird dazu permanent abgehört. Bei einer Kommunikation mit der Umwelt hingegen, beispielsweise über den Diagnosebus, wird jedes Steuergerät mit einer eindeutigen Adresse gezielt angesprochen.

Die Software, die die Funktionalität der Steuereinheit bestimmt, ist in Zukunft überwiegend in einem programmierbaren Speicher, beispielsweise in einem Flash-Speicher, untergebracht. Bei einer Flashprogrammierung können nur ganze Blöcke gelöscht und neu beschrieben werden. Das Löschen einzelner Bits ist nicht möglich. Je nach Steuergeräten werden unterschiedliche Arten von Mikrocomputern eingesetzt. Je nach Anforderungen sind dies 8-Bit, 16-Bit oder 32-Bit-Prozessoren. Alle diese Steuergeräte oder Controller sind in unterschiedlichen Varianten verfügbar. Sie weisen beispielsweise einen Flash-Speicher auf dem Board oder direkt im Prozessor selbst integriert auf.

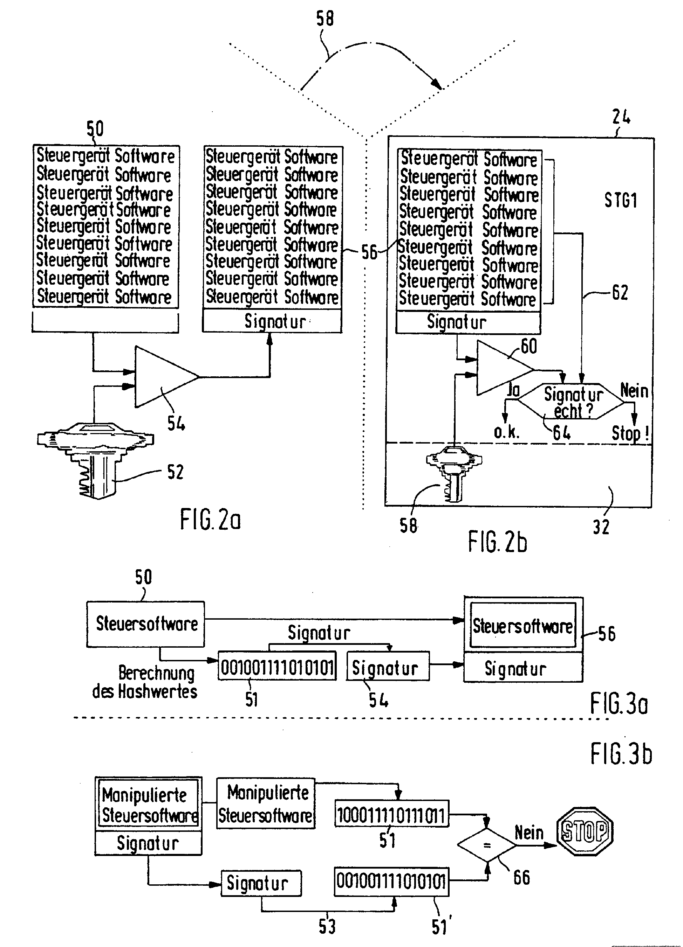

Der Ablauf einer Sicherstellung der Datenintegrität einer Software für ein Steuergerät mit einem Flash-Speicher ist nachfolgend anhand der Fig. 2a und 2b näher dargestellt.

Zunächst wird in einem ersten Schritt von einer einzigen autorisierten Stelle, beispielsweise in einem sogenannten Trust-Center, ein Schlüsselpaar bestehend aus einem öffentlichen Schlüssel 58 und einem geheimen Schlüssel 52 bereitgestellt. Ein Schlüssel ist dabei ein elektronischer Code, mit dem eine Information ver- und/oder entschlüsselt werden kann. Beispielsweise verwendet man dabei bekannte kryptographische Algorithmen, wie die bereits oben erwähnten RSA oder DEA Algorithmen, also sogenannte "Public-Key-Algorithmen" mit asynchronen Schlüsselpaaren.

Zunächst soll näher auf die verwendete Verschlüsselung eingegangen werden. Bei dem vorliegenden Authentifizierungsverfahren wird eine asynchrone Verschlüsselung bevorzugt. Bei symmetrischen Schlüsseln muß jede Seite im Besitz des "Geheimnisses" sein. Sobald ein synchroner Schlüssel neben den autorisierten Stellen auch noch Dritten bekannt ist, kann keine einwandfreie Sicherungsvorkehrung garantiert werden. Da ein Schlüssel des Schlüsselpaares bei dem vorliegenden Verfahren jedoch im Steuergerät eines Kraftfahrzeugs abgespeichert sein muß und somit dessen Geheimhaltung nicht sichergestellt werden kann, ist die Wahl eines symmetrischen Schlüsselpaares nicht ratsam.

Im Gegensatz zu der symmetrischen Verschlüsselung entwickelten W. Diffie und M. Hellman 1976 die sogenannte Public-Key-Kryptografie. Bei dieser Verschlüsselungsart wird ein Schlüsselpaar mit einem öffentlichen und einem geheimen Schlüssel erzeugt. Mit dem geheimen Schlüssel kann man eine Signatur eines elektronischen Dokumentes durchführen. Diese Signatur ist einzigartig und kann in der Regel nicht nachvollzogen werden. Mit dem öffentlichen Schlüssel kann die Signatur überprüft werden.

Das Public-Key-Verfahren hat den Vorteil, daß ein Schlüssel des Schlüsselpaares öffentlich bekannt sein darf. Da die heute bekannten Public-Key-Verfahren aber sehr rechenintensiv sind, verwendet man häufig Hybrid-Verfahren, also eine Kombination aus symmetrischen und asymmetrischen Verfahren. Bei dem Hybrid-Verfahren wird ein symmetrischer Schlüssel mittels eines Public-Key-Verfahrens zwischen den Kommunikationspartnern ausgetauscht. Die eigentliche Kommunikation wird dann mit dem symmetrischen Schlüssel verschlüsselt.

Durch die Trennung von geheimen und öffentlichen Schlüsseln lassen sich Authentifizierungsverfahren und digitale Signaturen wie oben beschrieben realisieren. Durch den Besitz des geheimen Schlüssels läßt sich eine Identität eindeutig nachweisen, und es kann eine Signatur, wie bei einer handschriftlichen Unterschrift erstellt werden. Ein bekanntes Public-Key-Kryptosysteme ist das oben bereits erwähnte RSA-Verfahren. Andere Public-Key-Krypto-Verfahren beruhen auf Problemen in bestimmten mathematischen Gruppen, Logarithmen zu berechnen (Diskreter-Logarithmus-Problem).

Um ein Dokument digital zu signieren, verschlüsselt die alleinig autorisierte Stelle das Dokument mit dem geheimen Schlüssel und hängt einen Signaturwert an das Dokument an. Zur Verifikation der Signatur wie die Signatur mit dem öffentlichen Schlüssel entschlüsselt und der resultierende Wert mit dem ursprünglichen Dokumentenwert verglichen. Stimmen beide Dokumentenwerte überein, so ist die Signatur gültig und die Software kann akzeptiert werden.

Vorliegend ist jeweils ein öffentlicher Schlüssel von der autorisierten Stelle bei der Fahrzeugproduktion in jedem Steuergerät eines Fahrzeugs, welches bezüglich der Software modifizierbar sein soll (z.B. Getriebesteuergerät), abgespeichert.

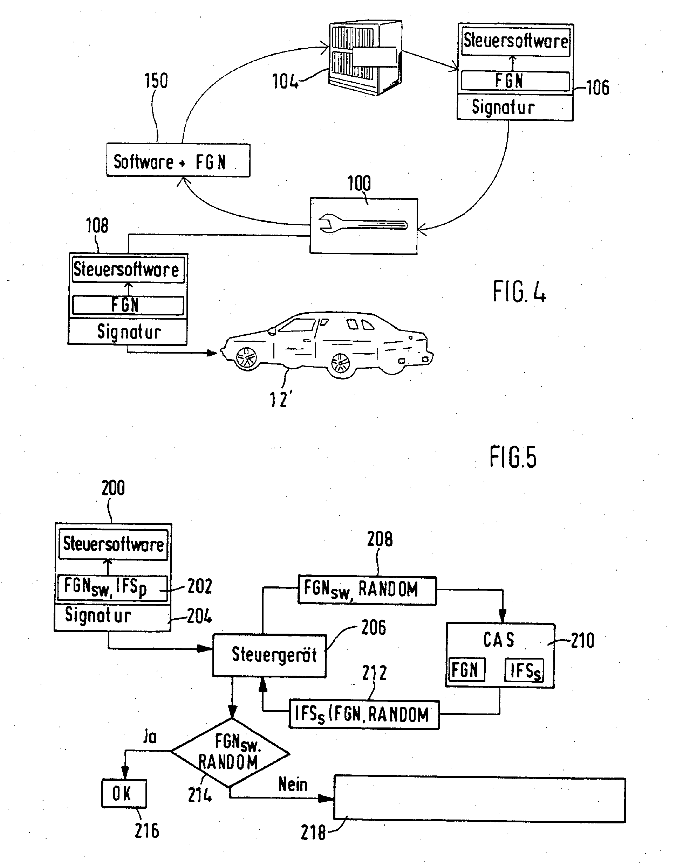

Ein Kunde bestellt nun bei einem Händler 100 (vgl. Fig. 4) eine bestimmte zusätzliche Funktion für sein Kraftfahrzeug, beispielsweise eine bestimmte Schaltcharakteristik bei der Auswahl der Übersetzungsstufen. Diese Funktion kann durch die Einspielung neuer Software in ein Getriebesteuergerät des jeweiligen Fahrzeugs realisiert werden.

Der Händler 100 stellt daraufhin eine entsprechende Software 150 zur Verfügung und sendet diese zusammen mit der Fahrgestellnummer des Fahrzeugs des Kunden zum Trust-Center 104, welches alleinig berechtigt ist, diese Software zu unterzeichnen (signieren). Im Trust-Center 104 wird die Software zusammen mit der übermittelten Fahrgestellnummer mit dem geheimen Schlüssel signiert.

Diese Vorgehensweise ist auch in Fig. 2a dargestellt (Software 50, geheimer Schlüssel 52), wobei hier jedoch keine Fahrgestellnummer übermittelt wird.

Die signierte Software 106 (vergl. Fig. 4 und Bezugszeichen 56 in Fig. 2a) wird dann an den Händler 100 zurückübermittelt, welcher sie ins Kraftfahrzeug 12 des Kunden einspielen kann.

Die Übermittlung an das Trust-Center 104, die Signierung und das Zurückübermitteln kann auf elektronischem Weg relativ schnell geschehen.

Im nächsten Schritt wird die signierte Software 56, 106 vom Händler 100 in das Fahrzeug 12, besser in das Getriebesteuergerät, eingespielt. Die Übertragung kann über den Diagnosestecker und den Diagnosebus 16 erfolgen. Alternativ kann eine Einspielung auch über das GSM-Netz ferngesteuert erfolgen.

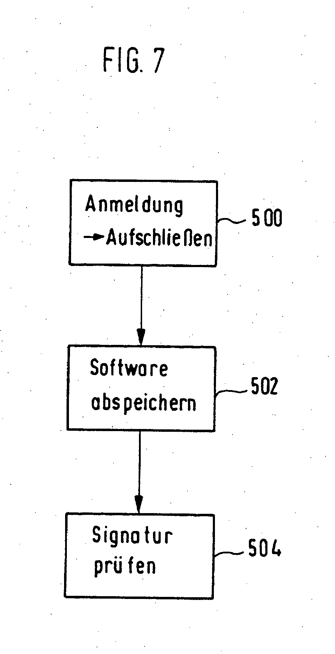

Beim Einspielen erfolgt zunächst eine Anmeldung und Identifizierung des Händlers (vgl. Schritt 500 in Fig. 7). Dazu sendet der Händler 100 eine Steuergeräteadresse und eine zugehörige Kennung an das Fahrzeug. Bei erfolgreicher Identifizierung wird das Steuergerät (hier: das Getriebesteuergerät) zum Einlesen von neuer Software bereitgeschaltet. Damit ist das Einlesen (auch Flashen) von neuer Software in das Steuergerät möglich (vgl. 502 in Fig. 7). Nach dem Einspielen der neuen Software in das Steuergerät hat der Händler 100 seinen Teil geleistet.

Beim nächsten Betrieb überprüft das Steuergerät 24 (Fig. 2) beim Hochlaufen die Signatur der eingespielten neuen Software 56 mittels des öffentlichen Schlüssels 58. Dies wird anhand von Fig. 2b näher erläutert. Mit dem öffentlichen Schlüssel 58 wird aus der Signatur in einer Einheit 60 des Steuergerätes 24 eine Größe bestimmt, die mit dem elektronischen Dokument 62, welches verschlüsselt worden ist, übereinstimmen muß. Diese Übereinstimmung wird in einem Komparator 64 geprüft. Ist eine Übereinstimmung gegeben, so wird die eingespielte Software 50 akzeptiert und das Steuergerät 24 mit dieser Software betrieben. Ist keine Übereinstimmung gegeben, so wird das Steuergerät 24 markiert und in einer Liste abgespeichert. Bei einer Diagnose können die Daten dieser Liste dann ausgelesen werden. Es wird dann eine weitere Gelegenheit zum Einspielen korrekter Software gegeben. Wird keine korrekt signierte Software eingespielt, kann das Fahrzeug nicht weiter betrieben werden.

In den Fig. 3a und 3b ist die Ver- und Entschlüsselung etwas genauer dargestellt. Bei der Signatur der Software wird nicht die gesamte Software signiert. Dies wäre ineffizient. Vielmehr wird aus der Software über eine an sich bekannte Hash-Funktion ein sogenannter Hash-Code 51 generiert, bei dem es sich um eine digitale Information mit vorgegebener Länge handelt. Je nach Sicherheitsbedürfnis kann eine Länge von z.B. 16 Bit, 64 Bit oder 128 Bit gewählt werden. Erst dieser Hash-Code 51 wird dann signiert (Signatur 54) und die Signatur an die Software 50 angehängt. Die Signierung des Hash-Codes ist wesentlich effizienter als die Signatur von langen Software-Dokumenten.

Die Hash-Funktionen haben dabei folgende wesentliche Eigenschaften: Es ist schwer, zu gegebenem Hash-Wert h einen Wert M eines Dokuments zu finden (Einwegfunktion). Zudem ist es schwer, eine Kollision, d.h. zwei Werte mit M und M', bei denen die Hash-Werte gleich sind, zu finden (Kollisionsresistenz).

Bei der Überprüfung der Signatur 50 wird durch Anwenden des öffentlichen Schlüssels auf die Signatur (Bezugszeichen 53 in Fig. 3b) ein Hash-Wert 51' ermittelt, der mit dem tatsächlichen Hash-Wert 51 der Software 50 in einem Komparator 66 verglichen wird. Stimmen beide Hash-Werte überein, so wird die Software 50 akzeptiert. Es handelt sich dann um eine authentische Software und das Steuergerät kann mit der eingespielten Software betrieben werden. Ist der Vergleich nicht positiv, bricht das Steuergerät seinen Betrieb ab und wartet bis eine einwandfreie Software mit ordnungsgemäßer Signatur eingespielt worden ist.

Neben dem oben beschriebenen Authentifizierungsablauf wird zur Authentifikation eines Kommunikationspartners A gegenüber einem Kommunikationspartners B häufig auch ein sogenanntes Challenge-Response-Verfahren verwendet. Dabei sendet B zunächst eine Zufallszahl RND an A. A signiert diese Zufallszahl mittels seines geheimen Schlüssels und sendet diesen Wert als Antwort an B. B verifiziert die Antwort mittels seines öffentlichen Schlüssels und prüft die Authentifizierung von A.

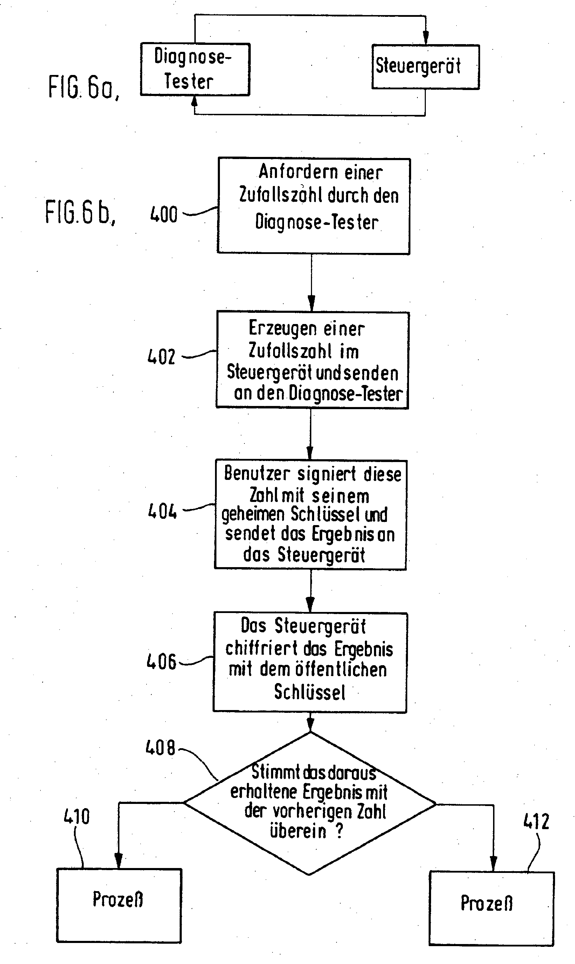

Eine solche Authentifizierung ist in den Fig. 6a und 6b dargestellt. In Fig. 6a ist die Kommunikationsschleife zwischen einem Diagnosetester und einem Steuergerät dargestellt. Bei der Authentifizierung nach dem Challenge-Response-Verfahren sendet ein Benutzer mittels des Diagnosetesters zunächst eine Information mit einem bestimmten Zugriffslevel LI an das Steuergerät und fordert eine Zufallszahl von dem Steuergerät an (Schritt 400). Das Steuergerät antwortet mit der Übertragung einer Zufallszahl (Schritt 402). Im Diagnosetester wird die Zufallszahl mit einem geheimen Schlüssel signiert und dann wird das Ergebnis wieder an das Steuergerät geschickt (Schritt 404). Im Steuergerät wird aus der Signatur mithilfe des öffentlichen Schlüssels wiederum die Zufallszahl bestimmt. Stimmt die so errechnete Zahl mit der vorher vom Steuergerät übermittelten Zufallszahl überein, wird der Zugriff für diesen Benutzer mit der gewünschten Sicherheitsstufe für die Dauer des Diagnoseverfahrens freigegeben. Damit kann er bei entsprechender Sicherheitseinstufung ein Software in den Speicher eines Steuergerätes einlesen.

Nachfolgend wird die Individualisierung der Software für ein bestimmtes Fahrzeug beschrieben. Bereits bei der Bezugnahme auf den Signiervorgang gemäß Fig. 4 wurde erwähnt, daß mit der Software eine Fahrzeugidentifikation übermittelt wird, die lediglich auf ein bestimmtes Fahrzeug zutrifft. Die Software wird dann zusammen mit der Fahrzeugidentifikation (z.B. der Fahrgestellnummer) signiert und das Paket an den Händler zurückgeschickt. Die Signatur ging dabei in den Hash-Code (beschrieben bei der Ausführungsform gemäß der Fig. 3a und 3b) ein und beeinflußt die Signatur entscheidend mit.

Das Steuergerät akzeptiert - wie bereits oben beschrieben - nur eine korrekt signierte Software. Ist die Signatur korrekt, wird ferner überprüft, ob die der Software zugeordnete Fahrzeugidentifikation mit derjenigen des Fahrzeug tatsächlich übereinstimmt. Würde dies der Fall sein, so würde die Software freigeschaltet. Mit dieser Vorgehensweise kann die fahrzeugindividualisierte Software nur in einem bestimmten Zielfahrzeug verwendet werden. Für ein anderes Fahrzeug muß wiederum eine andere mit einer individuellen Signatur versehene Software beschafft werden.

Um eine Individualisierung einer Software durchführen zu können, sollte die Fahrgestellnummer bereits in der Fertigung in die entsprechenden Steuergeräte in nicht manipulierbarer Weise eingetragen werden. Die Fahrgestellnummer muß auch nach einem Löschen eines Speichers noch in dem Steuergerät vorhanden sein. Dies kann dadurch realisiert werden, daß die Fahrgestellnummer beispielsweise in dem oben bereits erwähnten und besonders geschützen Car-Access-System in einem nicht flüchtigen und nicht austauschbaren Speicher eingetragen ist.

Folgende Vorgehensweise gemäß Fig. 5 sichert eine nicht manipulierbare Abfrage. Zusätzlich zur Fahrgestellnummer benötigt man ein weiteres fahrzeugindividuelles Schlüsselpaar bestehend aus einem geheimen Schlüssel IFSs und einem öffentlichen Schlüssel IFSp. Die Zuordnung der Fahrgestellnummer und der beiden Schlüssel erfolgt an zentraler Stelle, also in dem Trust-Center. Der geheime Schlüssel IFSs ist in einem Car-Access-System 210 gespeichert und zwar in nicht auslesbarer Form.

Die Fahrgestellnummer befindet sich auch heute bereits im Zugriffsbereich des Car-Access-Systems 210.

In der neu einzuspielenden Software wird nun zusätzlich zur Fahrgestellnummer noch der öffentliche fahrzeugindividuelle Schlüssel IFSp 202 hinterlegt (Schritt 200 in Fig. 5). Danach wird die gesamte Software im Trust-Center durch die Signatur 204 gesichert. Nach dem Einspielen der Software in das Steuergerät wird zunächst die Korrektheit der Signatur 204 geprüft.

Danach überprüft das Steuergerät 206 mittels der vorher beschriebenen Challenge-Response-Abfrage, ob die Fahrgestellnummer in der Software mit derjenigen des Fahrzeugs übereinstimmt. Dazu sendet das Steuergerät 206 die in der Software enthaltene Fahrgestellnummer FGNsw und eine Zufallszahl RANDOM an das Car-Access-System 210. Dort wird die gespeicherte Fahrgestellnummer FGN mit der empfangenen Fahrgestellnummer FGNsw verglichen. Anschließend werden die beiden Werte mit dem geheimen Schlüssel IFSs signiert und wieder an das Steuergerät 206 zurück gesendet. Das Steuergerät 206 kann nun mit dem öffentlichen Schlüssel IFSp die signierte Sendung überprüfen und die erhaltenen Werte mit dem Challenge-Wert vergleichen, der am Anfang an das Car-Access-System gesendet wurde. Stimmen die Werte überein, so kann die Software akzeptiert werden (Schritt 216, o.k.). Ansonsten wird die Software nicht akzeptiert (Schritt 218, Nein).

Als Variante dieses Verfahren kann anstelle eines individuellen Schlüsselpaares IFSs und IFSp auch ein entsprechendes nicht fahrzeugindividualisiertes Schlüsselpaar, das bereits im Fahrzeug gespeichert ist, verwendet werden. Dadurch entfällt die Verwaltung für diesen Schlüssel. Ebenso ist natürlich ein entsprechender Mechanismus mit einem symmetrischen kryptografischen Verfahren möglich. Dies hat zwar Vorteile bei der Abarbeitung, bringt aber die Gefahr des Auslesens des symmetrischen Schlüssels aus den Steuergeräten mit sich.

Natürlich ist bei allen oben genannten Verfahren absolut sicherzustellen, daß die geheimen Schlüssel des Trust-Centers auch geheim bleiben. Insgesamt bietet die vorgenannte Kryptografie eine gute Möglichkeit, nur ordnungsgemäße Software in Fahrzeuge, bzw. in bestimmte Fahrzeuge einzuspielen und somit unbefugten Manipulationen vorzubeugen.

## Patentansprüche

1. Verfahren zur Sicherstellung der Datenintegrität einer Software für ein Steuergerät eines Kraftfahrzeugs, in dem in einem Speicher des Steuergeräts eine das Steuergerät in seiner Wirkungsweise beeinflussende Software speicherbar ist, **dadurch gekennzeichnet** mit den Schritten
Bereitstellen eines Schlüsselpaares zum Ver- und Entschlüsseln von elektronischen Daten,
Hinterlegen eines ersten Schlüssels in einem oder für ein Steuergerät in dem Kraftfahrzeug,
Signieren einer einzuspielenden Software mit dem zweiten Schlüssel,
Einspielen der signierten Software in den Speicher des Steuergerätes,
Überprüfung der Signatur der Software mittels dem in oder für das Steuergerät hinterlegten Schlüssel und Akzeptieren der eingespielten Software, wenn die Überprüfung mit positivem Ergebnis verläuft,
der Software zumindest eine fahrzeugindividuelle Information eines das Steuergerät enthaltenden Fahrzeugs hinzugefügt wird,
die Software zusammen mit der zumindest einen fahrzeugindividuellen Information signiert wird,
daß neben dem Überprüfen der Signatur der Software auch die fahrzeugindividuelle Information überprüft wird, daß die Software nur dann im Steuergerät akzeptiert wird, wenn auch die fahrzeugindividuelle Information der Software mit derjenigen des Fahrzeugs übereinstimmt, und
die Signatur von der in der Software enthaltenen fahrzeugindividuellen Information abhängt.

2. Verfahren nach Anspruch 1,
**dadurch gekennzeichnet,**
**daß** ein symmetrisches Schlüsselpaar verwendet wird, bei dem beide Schlüssel gleich sind.

3. Verfahren nach Anspruch 1,
**dadurch gekennzeichnet,**
**daß** ein asymmetrisches Schlüsselpaar mit einem geheimen und einem öffentlichen Schlüssel verwendet wird.

4. Verfahren nach Anspruch 3,
**dadurch gekennzeichnet,**
**daß** der öffentliche Schlüssel im oder für das Steuergerät hinterlegt ist und mit dem geheimen Schlüssel die Software signiert wird.

5. Verfahren nach Anspruch 3,
**dadurch gekennzeichnet,**
**daß** das Fahrzeug, insbesondere das oder ein Steuergerät im Fahrzeug, ein asynchrones Schlüsselpaar erzeugt, daß der geheime Schlüssel im Fahrzeug, insbesondere in einem Steuergerät, hinterlegt wird und daß der öffentliche Schlüssel zum Signieren einer Software aus dem Fahrzeug auslesbar ist.

6. Verfahren nach einem der vorhergehenden Ansprüche,
**dadurch gekennzeichnet,**
**daß** der im Steuergerät abgelegte Schlüssel im Boot-Sektor abgelegt wird.

7. Verfahren nach Anspruch 6,
**dadurch gekennzeichnet,**
**daß** der Bootsektor nach dem Beschreiben und der Eingabe des Schlüssels abgesperrt wird und so gegen einen weiteren Zugriff, insbesondere einen Schreibzugriff, geschützt ist.

8. Verfahren nach einem der vorhergehenden Ansprüche,
**dadurch gekennzeichnet,**
**daß** die Software zunächst auf eine Information mit bestimmter Länge abgebildet wird und diese Information dann signiert wird.

9. Verfahren nach Anspruch 8,
**dadurch gekennzeichnet,**
**daß** als Abbildungsfunktion eine Hash-Funktion gewählt wird.

10. Verfahren nach Anspruch 1,
**dadurch gekennzeichnet,**
**daß** zur Überprüfung der fahrzeugindividuellen Information ein eigenes Schlüsselpaar (fahrzeugindividuelles Schlüsselpaar) erzeugt wird, wobei in einer Fahrzeugsicherheitseinheit die fahrzeugindividuelle Information und ein erster Schlüssel des eigenen Schlüsselpaares vorhanden sind, in der Software neben der fahrzeugindividuellen Information noch der zweite Schlüssel des eigenen Schlüsselpaares abgelegt ist und in einer separaten Routine im Fahrzeug überprüft wird, ob die beiden Schlüssel des eigenen Schlüsselpaares zusammenstimmen, um bei einer Bejahung die eingespielte Software zu akzeptieren.

11. Verfahren nach einem der vorhergehenden Ansprüche,
**dadurch gekennzeichnet,**
**daß** die Software zumindest beim erstmaligen Hochlaufen des Steuergerätes geprüft und dann entsprechend gekennzeichnet wird.

12. Verfahren nach einem der vorhergehenden Ansprüche,
**dadurch gekennzeichnet,**
**daß** bei einem externen Zugriff auf das Steuergerät eine Zugangseinheit prüft, ob eine Berechtigung für den Zugriff vorliegt.

13. Verfahren nach Anspruch 12,
**dadurch gekennzeichnet,**
**daß** ein Code von einem Steuergerät angefordert wird und der Code auf Richtigkeit überprüft wird.

14. Verfahren nach Anspruch 12 oder 13,
**dadurch gekennzeichnet,**
**daß** ein Steuergerät eine Zufallszahl ausgibt, die von dem Zugreifer zu signieren ist und daß die Signatur im Steuergerät, insbesondere mittels eines Authentifizierungsschlüssels, überprüft wird.

15. Verfahren nach einem der Ansprüche 12 bis 14,
**dadurch gekennzeichnet,**
**daß** bei der Abfrage der Zugriffsberechtigung eine Berechtigungsstufe festgestellt wird und Zugriffsaktionen in Abhängigkeit von der Berechtigungsstufe akzeptiert oder nicht akzeptiert werden.

16. Verfahren nach einem der vorhergehenden Ansprüche,
**dadurch gekennzeichnet,**
**daß** eine Sicherheitseinrichtung in einem Fahrzeug zumindest sporadisch eine Authentitätsprüfung eines Steuergerätes durchführt und das Steuergerät bei negativem Ergebnis registriert.

17. Verfahren nach Anspruch 16,
**dadurch gekennzeichnet,**
**daß** im Steuergerät ein steuergeräteindividueller geheimer Code hinterlegt ist.

18. Verfahren nach Anspruch 16 oder 17,
**dadurch gekennzeichnet,**
**daß** die Sicherheitseinrichtung ein steuergerätespezifisches Merkmal abfrägt und dieses auf Authentität prüft.

19. Verfahren nach einem der Ansprüche 16 bis 18,
**dadurch gekennzeichnet,**
**daß** bei der Authentitätsprüfung ein in der Sicherheitseinrichtung und/oder ein in dem Steuergerät hinterlegter Schlüssel verwendet wird.

## Claims

1. A method for ensuring the data integrity of software for a control unit of a motor vehicle, wherein software influencing the mode of operation of the control unit can be stored in a memory of the control unit, **characterised by** the steps of:
providing a pair of keys for encrypting and decrypting electronic data,
storing a first key in a, or for a, control unit in the motor vehicle,
signing software to be imported with the second key,
importing the signed software in the memory of the control unit,
checking the signature of the software by means of the key stored in, or for, the control unit and accepting the imported software when checking proceeds with a positive result, and **characterised in that**
at least one piece of information specific to the vehicle of a vehicle containing the control unit is added to the software,
the software, together with the at least one piece of information specific to the vehicle, is signed,
**in that,** in addition to checking the signature of the software, the information specific to the vehicle is also checked, **in that** the software is only accepted in the control unit when the information specific to the vehicle of the software agrees with that of the vehicle, and
**in that** the signature depends on the information specific to the vehicle contained in the software.

2. A method according to claim 1, **characterised in that** a symmetrical pair of keys is used, wherein the two keys are identical.

3. A method according to claim 1, **characterised in that** an asymmetric pair of keys with a secret and a public key is used.

4. A method according to claim 3, **characterised in that** the public key is stored in, or for, the control unit and the software is signed with the secret key.

5. A method according to claim 3, **characterised in that** the vehicle, more especially the, or a, control unit in the vehicle, produces an asynchronous pair of keys, **in that** the secret key is stored in the vehicle, more especially in a control unit, and **in that** the public key can be read out from the vehicle for signing software.

6. A method according to any one of the preceding claims, **characterised in that** the key stored in the control unit is stored in the boot sector.

7. A method according to claim 6, **characterised in that** the boot sector is blocked after the inscription and input of the key and is thus protected against a further access, more especially a writing access.

8. A method according to any one of the preceding claims, **characterised in that** the software is firstly mapped for information with a specific length and this information is then signed.

9. A method according to claim 8, **characterised in that** a hash function is selected as the mapping function.

10. A method according to claim 1, **characterised in that** to check the information specific to the vehicle, a pair of keys of its own (pair of keys specific to the vehicle) is produced, the information specific to the vehicle and a first key of the pair of keys of its own being present in a first vehicle security unit, the second key of the pair of keys of its own also being stored, in addition to the information specific to the vehicle, in the software and a check being made in a separate routine in the vehicle as to whether the two keys of the pair of keys of its own agree in order to accept the imported software in the event of an affirmative response.

11. A method according to any one of the preceding claims, **characterised in that** the software is checked at least during the initial running-up of the control unit and is then correspondingly characterised.

12. A method according to any one of the preceding claims, **characterised in that** in the event of an external access to the control unit, an access unit checks whether an authorisation exists for the access.

13. A method according to claim 12, **characterised in that** a code is requested by a control unit and the code is checked for validity.

14. A method according to claim 12 or 13, **characterised in that** a control unit outputs a random number, which is to be signed by the accessing party, and **in that** the signature is checked in the control unit, more especially by means of an authentication key.

15. A method according to any one of claims 12 to 14, **characterised in that** when the access authorisation is queried, an authorisation stage is determined and access actions are accepted or not accepted depending on the authorisation stage.

16. A method according to any one of the preceding claims, **characterised in that** a security device in a vehicle at least sporadically carries out an authenticity check of a control unit and registers the control unit in the event of a negative result.

17. A method according to claim 16, **characterised in that** a secret code specific to the control unit is stored in the control unit.

18. A method according to claim 16 or 17, **characterised in that** the security device queries a feature specific to the control unit and checks this for authenticity.

19. A method according to any one of claims 16 to 18, **characterised in that** a key stored in the security device and/or a key stored in the control unit is used in the authenticity check.

## Revendications

1. Procédé permettant de sécuriser l'intégrité des données d'un logiciel pour un appareil de commande d'un véhicule selon lequel un logiciel pouvant agir sur le mode de fonctionnement de l'appareil de commande, peut être enregistré dans une mémoire de cet appareil de commande, **caractérisé en ce qu'**
il comporte les étapes consistant à :
- se procurer une paire de clés pour permettre de verrouiller et de déverrouiller des données électroniques,
- déposer une première clé dans un ou pour un appareil de commande dans le véhicule,
- signer un logiciel chargé avec la seconde clé,
- charger le logiciel signé dans la mémoire de l'appareil de commande,
- contrôler la signature du logiciel au moyen de la clé déposée dans ou pour l'appareil de commande et accepter le logiciel chargé lorsque le contrôle donne un résultat positif,
- ajouter au logiciel au moins une information propre au véhicule d'un véhicule renfermant l'appareil de commande,
- signer le logiciel avec l'information propre au véhicule,
- outre le contrôle de la signature du logiciel, on contrôle également l'information propre au véhicule, et le logiciel n'est accepté dans l'appareil de commande que si l'information propre au véhicule du logiciel coïncide avec celle du véhicule, et
- la signature dépend de l'information propre au véhicule contenue dans le logiciel.

2. Procédé conforme à la revendication 1,
**caractérisé en ce que**
l'on utilise une paire de clés symétriques dans laquelle les deux clés sont similaires.

3. Procédé conforme à la revendication 1,
**caractérisé en ce que**
l'on utilise une paire de clés non symétriques comportant une clé confidentielle et une clé publique.

4. Procédé conforme à la revendication 3,
**caractérisé en ce que**
la clé publique est déposée dans ou pour l'appareil de commande et le logiciel est signé avec la clé confidentielle.

5. Procédé conforme à la revendication 3,
**caractérisé en ce que**
le véhicule, en particulier l'appareil de commande ou un appareil de commande dans le véhicule produit une paire de clés asynchrones, la clé confidentielle est déposée dans le véhicule, en particulier dans un appareil de commande et la clé publique peut être extraite pour signer un logiciel à partir du véhicule.

6. Procédé conforme à l'une des revendications précédentes,
**caractérisé en ce que**
la clé déposée dans l'appareil de commande est déposée dans un secteur d'initialisation.

7. Procédé conforme à la revendication 6,
**caractérisé en ce que**
le secteur d'initialisation est verrouillé après l'inscription et l'introduction de la clé et est ainsi protégé contre un autre accès en particulier un accès d'inscription.

8. Procédé conforme à l'une des revendications précédentes,
**caractérisé en ce que**
le logiciel est tout d'abord appliqué sur une information ayant une longueur prédéfinie et cette information est ensuite signée.

9. Procédé conforme à la revendication 8,
**caractérisé en ce qu'**
en tant que fonction d'application on choisit une fonction de Hash.

10. Procédé conforme à la revendication 1,
**caractérisé en ce que**
pour vérifier l'information propre au véhicule on produit une paire de clés propre (paire de clés propre au véhicule), et, dans une unité de sécurité du véhicule sont présentes l'information propre au véhicule et une première clé de la paire de clés propre, dans le logiciel, outre l'information propre au véhicule, est également déposée la seconde clé de la paire de clés propre, et, dans une routine séparée dans le véhicule on vérifie si les deux clés de la paire de clés propre coïncident pour accepter, lors d'une approbation le logiciel chargé.

11. Procédé conforme à l'une des revendications précédentes,
**caractérisé en ce que**
le logiciel est vérifié au moins lors de la première mise en marche de l'appareil de commande et est ensuite marqué en conséquence.

12. Procédé conforme à l'une des revendications précédentes,
**caractérisé en ce qu'**
en présence d'un accès externe à l'appareil de commande, une unité d'entrée vérifie si l'accès est autorisé.

13. Procédé conforme à la revendication 12,
**caractérisé en ce qu'**
un code est demandé par un appareil de commande et l'exactitude de ce code est vérifiée.

14. Procédé conforme à la revendication 12 ou 13,
**caractérisé en ce qu'**
un appareil de commande délivre un numéro aléatoire qui doit être signé par l'accesseur, et la signature est vérifiée dans l'appareil de commande, en particulier au moyen d'une clé d'identification.

15. Procédé conforme à l'une des revendications 12 à 14,
**caractérisé en ce que**
lors d'une demande d'autorisation de l'accès, une étape d'autorisation est effectuée, et des actions d'accès sont acceptées ou ne le sont pas en fonction de cette étape d'autorisation.

16. Procédé conforme à l'une des revendications précédentes,
**caractérisé en ce qu'**
un dispositif de sécurité met en oeuvre dans un véhicule, au moins de façon sporadique un contrôle d'authenticité d'un appareil de commande et enregistre l'appareil de commande en cas de résultat négatif.

17. Procédé conforme à la revendication 16,
**caractérisé en ce que**
dans l'appareil de commande est déposé un code secret propre à cet appareil de commande.

18. Procédé conforme à la revendication 16 ou 17,
**caractérisé en ce que**
le dispositif de sécurité interroge une caractéristique propre à l'appareil de commande et vérifie son authenticité.

19. Procédé conforme à l'une des revendications 16 à 18,
**caractérisé en ce que**
lors d'une vérification d'authenticité on utilise une clé déposée dans le dispositif de sécurité et/ou dans l'appareil de commande.
